(19) Europäisches Patentamt
European Patent Office
Office européen des brevets

(11) **EP 2 931 454 B1**

(12) **FASCICULE DE BREVET EUROPEEN**

(45) Date de publication et mention
de la délivrance du brevet:
**15.03.2017 Bulletin 2017/11**

(21) Numéro de dépôt: **13802990.5**

(22) Date de dépôt: **11.12.2013**

(51) Int Cl.:
***B21D 26/14*** *(2006.01)*   ***B21D 39/00*** *(2006.01)*
***B21D 51/24*** *(2006.01)*   ***B23K 20/06*** *(2006.01)*

(86) Numéro de dépôt international:
**PCT/EP2013/076284**

(87) Numéro de publication internationale:
**WO 2014/090902 (19.06.2014 Gazette 2014/25)**

(54) **PROCÉDÉ D'ASSEMBLAGE PAR SERTISSAGE MAGNÉTIQUE**

MONTAGEVERFAHREN MIT MAGNETISCHEM BÖRDELN

METHOD OF ASSEMBLY USING MAGNETIC CRIMPING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.12.2012 FR 1262026**

(43) Date de publication de la demande:
**21.10.2015 Bulletin 2015/43**

(73) Titulaire: **ADM28 S.àr.l.**
**1931 Luxembourg (LU)**

(72) Inventeur: **MANDEL, Eric**
**02100 St Quentin (FR)**

(74) Mandataire: **Cabinet BARRE LAFORGUE &
associés**
**35, rue Lancefoc**
**31000 Toulouse (FR)**

(56) Documents cités:
**WO-A1-2007/132468   BE-A- 676 306**
**GB-A- 2 275 920   US-A- 2 867 358**

EP 2 931 454 B1

**Description**

L'invention concerne un procédé d'assemblage de deux pièces par sertissage magnétique selon le préambule de la revendication 1 et un assemblage selon le préambule de la revendication 12, obtenu par un tel procédé, notamment le sertissage magnétique d'un couvercle métallique sur un récipient. Un tel procédé est décrit dans le document WO 2007/132468 et un tel assemblage est décrit dans le document BE-A-676306.

Dans de nombreuses applications on cherche à assembler un fond et un couvercle sur une pièce cylindrique pour la fermer et former un contenant permettant de stocker des liquides ou des gaz, notamment des liquides ou des gaz sous pression. On cherche notamment à monter un couvercle sur un récipient de façon hermétique.

On connaît déjà un procédé de sertissage de couvercles sur des récipients par sertissage magnétique. Ainsi, WO 2007/132468 décrit un procédé dans lequel l'extrémité d'un récipient de forme cylindrique est introduite dans la gorge circulaire d'un couvercle, le rebord du couvercle étant déformé par un impact magnétique de façon à sertir le couvercle sur le récipient. Un tel procédé permet d'obtenir un contenant fermé, notamment hermétique.

Cependant, un tel procédé et l'assemblage obtenu par un tel procédé présentent des inconvénients. En effet, de tels contenants fermés sont généralement destinés à accueillir un gaz ou un liquide sous pression ou un vide partiel, de sorte que l'assemblage entre le récipient et le couvercle subit des efforts en traction selon l'axe du contenant tendant à séparer ou rapprocher le couvercle et le récipient. Or l'extrémité du récipient est simplement serrée radialement dans la gorge sertie du couvercle. Ainsi, seuls les efforts de friction entre le couvercle et le récipient s'opposent à leur déplacement axial.

De plus, dans un tel procédé, l'extrémité libre de la lèvre de sertissage est frottée de façon importante contre le récipient lors du sertissage magnétique, provoquant une soudure et non un simple sertissage du couvercle sur le récipient. Cet effet a pour conséquence, localement, une dégradation des qualités du récipient, notamment de l'épaisseur de celui-ci, et éventuellement le déchirement d'une couche de protection externe du récipient.

En outre, avec un tel procédé, l'assemblage obtenu présente un bourrelet inesthétique à la périphérie du couvercle.

L'invention vise à pallier ces inconvénients.

L'invention vise donc à proposer un procédé d'assemblage de deux pièces -notamment d'un récipient et d'un couvercle- permettant d'obtenir un assemblage particulièrement résistant à des efforts relatifs longitudinaux impartis notamment par un fluide sous pression contenu dans le contenant ou par un vide partiel isolé dans le contenant d'une pression extérieure.

L'invention vise également à proposer un tel procédé qui permet d'obtenir un contenant hermétique aux gaz et aux liquides.

L'invention vise aussi à proposer un tel procédé de sertissage qui soit rapide et permette donc une haute cadence d'exécution.

L'invention vise également à proposer un tel procédé qui permet d'obtenir un contenant particulièrement esthétique.

L'invention vise en outre à proposer un procédé pouvant être mis en oeuvre sur des machines de sertissage magnétique existantes.

Dans tout le texte, on désigne par "sertissage magnétique" la technique de déformation d'une pièce électriquement conductrice sur une autre par génération d'une impulsion magnétique à proximité de la pièce électriquement conductrice et par effet des forces de Laplace sur les porteurs de charges de courant induit dans la pièce électriquement conductrice par l'impulsion magnétique.

De plus, on désigne de manière conventionnelle dans tout le texte par "orientation" d'une surface libre d'une pièce, une direction et un sens correspondant à une perpendiculaire à un plan tangent de cette surface libre, orientée vers l'extérieur à partir de cette surface.

L'invention concerne donc un procédé d'assemblage selon au moins une direction, dite direction de traction,

- d'une première pièce présentant un bord, dit bord à sertir, s'étendant à une extrémité de ladite première pièce selon la direction de traction,
- et d'une deuxième pièce présentant :

- une lèvre, dite lèvre de sertissage, au moins pour partie constituée d'un matériau électriquement conducteur,
- une butée, dite butée de sertissage, s'étendant en regard et à distance d'un flanc intérieur de la lèvre de sertissage, en ménageant une gorge, dite gorge de sertissage :

  - ouverte selon la direction de traction,
  - adaptée pour recevoir ledit bord à sertir de la première pièce,

procédé dans lequel :

- le bord à sertir de la première pièce est introduit dans la gorge de sertissage de la deuxième pièce selon ladite direction de traction,
- puis un sertissage magnétique est réalisé en appliquant à la lèvre de sertissage une variation de champ magnétique adaptée pour rabattre sans enroulement et déformer plastiquement la lèvre de sertissage en direction de la butée de sertissage, de façon à fermer la gorge de sertissage sur le bord à sertir de la première pièce,

caractérisé en ce que :

- la butée de sertissage présente au moins une portion inclinée par rapport à la direction de traction,
- ladite lèvre de sertissage présente une longueur supérieure à la profondeur de la gorge de sertissage,

    - lors du sertissage magnétique une extrémité libre de la lèvre de sertissage est rabattue contre une face, dite face intérieure, de la deuxième pièce, ladite face intérieure étant distincte de la butée de sertissage, de sorte que le bord à sertir présente une portion en butée contre ladite face intérieure d'une part et en butée contre l'extrémité libre de la lèvre de sertissage d'autre part.

La gorge de sertissage s'étend, en profil, entre ledit flanc de la lèvre de sertissage et la butée de sertissage. Le profil est une vue en coupe par un plan comprenant la direction de traction, par exemple un plan radial dans le cas de pièce cylindriques.

De plus, avantageusement et selon l'invention, la butée de sertissage est orientée selon une direction formant un angle distinct de 90° avec ladite direction de traction.

Notamment, la butée de sertissage est orientée selon une direction formant un angle supérieur à 20° avec ladite direction de traction, et plus particulièrement un angle compris entre 30° et 45°.

Plus particulièrement, la lèvre de sertissage et la butée de sertissage sont adaptées pour que, après sertissage, au moins une portion de surface de contact entre la lèvre de sertissage et le bord à sertir est orientée selon une direction inclinée -notamment formant un angle distinct de 90°- avec ladite direction de traction.

L'invention permet ainsi d'obtenir un assemblage dans lequel les surfaces en contact du bord à sertir et de la butée de sertissage sont inclinées par rapport à une direction de traction selon laquelle la première et la deuxième pièce sont appelées à subir des efforts de traction relativement l'une par rapport à l'autre. L'invention permet aussi d'obtenir un assemblage dans lequel des surfaces en contact du bord à sertir et de la lèvre de sertissage sont inclinées par rapport à une direction de traction selon laquelle la première et la deuxième pièce sont appelées à subir des efforts de traction relativement l'une par rapport à l'autre.

Dans un procédé et un assemblage selon l'invention, la lèvre de sertissage présente, en profil, une longueur selon la direction de traction supérieure à la profondeur de la gorge de sertissage selon la direction de traction.

La lèvre de sertissage s'étend donc au-delà de l'ouverture de la gorge de sertissage. Ainsi, lorsque la lèvre de sertissage est rabattue sur le bord à sertir, seule une portion de la lèvre de sertissage est stoppée par la butée de sertissage. L'extrémité libre de la lèvre de sertissage n'est pas stoppée par la butée de sertissage, car elle s'étend au-delà de ladite butée de sertissage, de sorte que, lors du sertissage, elle continue sa course et entraîne le bord à sertir de la première pièce au-delà de la gorge de sertissage, provoquant localement une déformation additionnelle du bord à sertir.

Lors du sertissage, l'extrémité libre de la lèvre de sertissage est avantageusement rabattue contre une face, dite face intérieure, de la deuxième pièce. Ladite face intérieure forme un angle avec la butée de sertissage. Une portion du bord à sertir est donc déformée et serrée entre la face intérieure et l'extrémité libre de la lèvre de sertissage.

Ladite face intérieure comprend au moins une portion plane et orthogonale à la direction de traction, ladite portion recevant l'extrémité libre de la lèvre de sertissage lors du sertissage. Cette portion est une portion périphérique de la face intérieure lorsque la première pièce est à contour fermé, notamment elle est annulaire lorsque la première pièce est cylindrique. Ladite face intérieure est, avantageusement et selon l'invention, plane et orthogonale à la direction de traction.

Une telle lèvre de sertissage de longueur supérieure à la profondeur de la gorge de sertissage permet de créer des butées additionnelles entre la première pièce et la deuxième pièce, d'orientation différente des butées entre le bord à sertir et la butée de sertissage et entre la lèvre de sertissage et le bord à sertir. Notamment une telle caractéristique permet d'améliorer la résistance aux efforts de traction selon la direction de traction, dans les deux sens.

Avantageusement et selon l'invention, la butée entre le bord à sertir et la face intérieure est orthogonale à la direction de traction, et la butée entre le bord à sertir et l'extrémité libre de la lèvre de sertissage est orthogonale à la direction de traction. Plus particulièrement, la butée entre le bord à sertir et la face intérieure est plane et orthogonale à la direction de traction, et la butée entre le bord à sertir et l'extrémité libre de la lèvre de sertissage est plane et orthogonale à la direction de traction.

La résistance à la traction de l'assemblage entre la première pièce et la deuxième pièce est donc élevée. En effet, des efforts de réaction interviennent au niveau de surfaces en butée les unes sur les autres et non seulement des efforts de friction entre la première pièce et la deuxième pièce.

Avantageusement, dans un procédé conforme à l'invention, avant l'étape d'introduction du bord à sertir dans la gorge de sertissage, la gorge de sertissage est formée dans la deuxième pièce selon une forme conjuguée de celle du bord à sertir de la première pièce.

Avantageusement, la gorge de sertissage est formée à proximité d'un bord de la deuxième pièce, de sorte que la deuxième pièce présente d'un côté de la gorge de sertissage une partie massive limitée par la butée de sertissage et de l'autre côté de la gorge de sertissage une lèvre de sertissage s'étendant, en profil, entre la gorge de sertissage et une face extérieure de la deuxième pièce. Ainsi, la butée de sertissage étant une surface externe d'une portion massive de la deuxième pièce, elle n'est avantageusement pas déformée par l'impact de la lèvre de sertissage et du bord à sertir lors de l'étape de sertissage.

De plus, avantageusement et selon l'invention, la butée de sertissage présente une inclinaison par rapport à la direction de traction telle que, en profil, l'ouverture de la gorge de sertissage est plus large que le fond de la gorge de sertissage.

La largeur -définie par la distance entre la butée de sertissage et la lèvre de sertissage- de l'ouverture de la gorge de sertissage est plus importante que la largeur du fond de la gorge de sertissage. Cela permet d'introduire le bord à sertir aisément et sans forcer dans la gorge de sertissage.

Le fait que le fond de la gorge de sertissage soit étroit permet d'obtenir un sertissage de meilleure qualité et plus esthétique.

Avantageusement et selon l'invention, la gorge de sertissage présente un profil trapézoïdal.

Notamment, avantageusement, la face intérieure de la lèvre de sertissage s'étend selon la direction de traction, le fond de la gorge de sertissage perpendiculairement à la direction de traction et la butée de sertissage avec un angle non-nul par rapport à la direction de traction. On obtient ainsi, en profil, un fond de la gorge de sertissage plus étroit que l'ouverture de la gorge de sertissage.

Plus particulièrement, le fond de la gorge de sertissage est avantageusement de largeur identique à l'épaisseur du bord à sertir introduit dans la gorge de sertissage.

La lèvre de sertissage présente, en profil, une zone, dite pied, par laquelle elle est reliée au reste de la deuxième pièce et une portion en saillie à partir dudit pied, qui présente une extrémité libre.

Lors du sertissage magnétique, la lèvre de sertissage est rabattue contre le bord à sertir en direction de la butée de sertissage, mais non le pied de la lèvre de sertissage qui reste à une distance prédéterminée de la butée de sertissage.

En effet, la différence d'épaisseur entre le bord à sertir et le fond de la gorge de sertissage permet d'obtenir un déplacement de la lèvre de sertissage le plus orthogonal possible à la surface de la première pièce, avec une rotation minimisé de la lèvre de sertissage autour de son point d'attache à la deuxième pièce. En particulier la lèvre de sertissage ne présente pas de doubles inflexions de sens opposé après sertissage, mais uniquement une ou deux inflexions de même sens.

Lors de l'étape de sertissage magnétique, l'impulsion (durée et intensité) magnétique est choisie de telle sorte que le bord à sertir est aussi déplacé sous l'effet de la déformation de la lèvre de sertissage jusqu'à ce que le bord à sertir arrive au contact de la butée de sertissage. Une portion de la première pièce située à proximité du bord à sertir est donc déformée.

La première pièce est avantageusement maintenue en position au cours de l'étape de sertissage.

Le bord à sertir est avantageusement à contour fermé, par exemple cylindrique.

Cependant dans le cas d'un bord à sertir qui est un contour fermé, les efforts impartis par la lèvre de sertissage lors du sertissage sont répartis à la périphérie du contour et se compensent de sorte qu'il n'est pas nécessaire de maintenir la première pièce en position.

Avantageusement dans les modes de réalisation de l'invention dans lesquels la première pièce présente à bord à sertir à contour fermé, conformément à l'invention, les butées créées par serrage d'une première portion du bord à sertir entre une partie non-extrémale de la lèvre de sertissage et la butée de sertissage, sont radialement à l'extérieur des butées créées par serrage d'une deuxième portion du bord à sertir entre l'extrémité libre de la lèvre de sertissage et la face intérieure de la deuxième pièce. C'est notamment le cas pour des première pièce et deuxième pièce cylindriques.

Ainsi, conformément à l'invention, la première pièce est exempte de collerette - notamment le bord à sertir est exempt de collerette - pour créer des butées orthogonales à la direction de traction. De telles butées sont créées à l'intérieur des dimensions hors-tout de la première pièce, de sorte que l'assemblage obtenu conformément à l'invention est particulièrement esthétique.

Le bord à sertir présente avantageusement, avant sertissage, une face dont au moins une portion est une forme complémentaire d'au moins une portion de la butée de sertissage. Ainsi, lors de l'introduction du bord à sertir dans la gorge de sertissage, le bord à sertir vient directement au contact de la butée de sertissage.

Le bord à sertir est avantageusement d'épaisseur constante.

Par ailleurs, la lèvre de sertissage est au moins pour partie constituée d'un matériau bon conducteur d'électricité. Notamment la lèvre de sertissage comprend avantageusement au moins une couche continue d'un matériau bon conducteur d'électricité.

Plus particulièrement, la lèvre de sertissage est avantageusement au moins pour partie constituée d'un matériau de conductivité électrique supérieure à $5 \times 10^6$ S.m$^{-1}$.

En outre, la lèvre de sertissage est au moins pour partie constituée d'un matériau de perméabilité magnétique relative proche de 1. Ainsi, le champ magnétique de l'impulsion magnétique de sertissage pénètre peu profondément dans la lèvre de sertissage (l'épaisseur de peau de l'effet de peau provoquée dans la lèvre de sertissage est faible), ce qui permet d'obtenir une pression sur la lèvre de sertissage élevée et une vitesse importante de la lèvre de sertissage au moment du sertissage et ainsi d'assurer un assemblage mécanique fiable et résistant.

Ainsi, la lèvre de sertissage est avantageusement choisie parmi les matériaux amagnétiques (de perméabilité magnétique relative égale à 1), paramagnétiques, et diamagnétiques (de perméabilités magnétiques relatives proches de 1).

Avantageusement et selon l'invention, un joint d'étanchéité est introduit entre le bord à sertir et la gorge de sertissage, ledit joint d'étanchéité étant adapté pour s'étendre sur toute la longueur du bord à sertir. Avantageusement ledit joint d'étanchéité est introduit entre le bord à sertir et la gorge de sertissage avant le sertissage magnétique de la lèvre de sertissage sur le bord à sertir. Le joint d'étanchéité est avantageusement disposé entre un flanc du bord à sertir et un flanc de la gorge de sertissage, c'est-à-dire entre un flanc du bord à sertir et la lèvre de sertissage ou entre un flanc du bord à sertir et la butée de sertissage. Le joint d'étanchéité est avantageusement choisi dans un matériau plus mou que le bord à sertir et que la lèvre de sertissage (respectivement la butée de sertissage). Ainsi, le joint d'étanchéité est déformé par écrasement entre un flanc de la gorge de sertissage et le bord à sertir, assurant ainsi une étanchéité entre la première pièce et la deuxième pièce.

Dans un procédé selon l'invention, la gorge de sertissage présentant avantageusement une rainure, un joint d'étanchéité est avantageusement monté dans ladite rainure. Avantageusement et selon l'invention, la rainure est ménagée dans la gorge de sertissage avant le montage dudit joint d'étanchéité. Plus particulièrement, la rainure est avantageusement ménagée dans la butée de sertissage.

La gorge de sertissage présente avantageusement un profil globalement trapézoïdal et, localement, des variations de forme liées à des exigences techniques. Par exemple la butée de sertissage et/ou la lèvre de sertissage et/ou le fond de la gorge de sertissage peuvent présenter une ou plusieurs rainures permettant chacune de monter un ou plusieurs joints d'étanchéité entre la gorge de sertissage de la deuxième pièce et le bord à sertir de la première pièce.

Un tel joint d'étanchéité permet d'améliorer l'étanchéité aux fluides de l'assemblage serti selon l'invention entre la première pièce et la seconde pièce.

Dans le cas particulier de l'assemblage d'une deuxième pièce à gorge de sertissage de forme circulaire sur un bord à sertir cylindrique, la rainure dans la butée de sertissage est adaptée pour recevoir un joint d'étanchéité torique.

De plus, avantageusement et selon l'invention, un film est interposé entre le bord à sertir et la gorge de sertissage.

Un tel film est avantageusement inséré entre le bord à sertir et la gorge de sertissage avant l'introduction du bord à sertir dans la gorge de sertissage.

Un tel film peut permettre d'assurer une étanchéité aux fluides entre la première et la deuxième pièce et peut être monté seul ou en combinaison avec un joint d'étanchéité tel que décrit ci-dessus.

Un tel film comprend avantageusement au moins une couche de matériau électriquement isolant. Le film est avantageusement formé d'un matériau polymère diélectrique. Un tel film isolant permet d'isoler électriquement la première pièce de la deuxième. Un tel film permet ainsi d'éviter des réactions d'oxydoréduction entre la première et la deuxième pièce, permettant ainsi de réaliser des assemblages dans lesquels la première pièce et la deuxième pièce sont faites de matériaux métalliques comprenant des métaux différents.

Le film isolant est avantageusement souple.

Alternativement, le film isolant est avantageusement rigide et monté dans la gorge de sertissage ou sur le bord à sertir.

Un tel film peut être réalisé extemporanément par application d'un matériau électriquement isolant - par exemple un matériau à l'état liquide - sur le bord à sertir juste avant l'étape de sertissage magnétique.

Avantageusement et selon l'invention, la gorge de sertissage est gauche. C'est-à-dire que la gorge de sertissage n'est pas rectiligne et présente au moins un angle ou une courbe. L'assemblage de deux pièces gauches, c'est-à-dire qui ne sont pas des plaques, selon un procédé conforme à l'invention est particulièrement résistant à la traction.

Avantageusement et selon l'invention, le bord à sertir de la première pièce est une extrémité de la première pièce, notamment une extrémité selon la direction de traction.

Avantageusement et selon l'invention, le bord à sertir de la première pièce est une languette. La languette est notamment adaptée - c'est-à-dire de largeur et de forme adaptées - pour pouvoir être introduite dans la gorge de sertissage. Une languette est avantageusement une partie de la première pièce qui forme un bord à sertir de la première pièce. Une telle languette présente une dimension dans le sens de l'épaisseur très inférieure à ses deux autres dimensions. Ainsi, le bord à sertir peut présenter une pluralité de languettes introduites dans la gorge de sertissage, ou bien une unique languette formant un bord à sertir continu sur toute la longueur de la gorge à sertir.

Le bord à sertir de la première pièce est une paroi.

Plus particulièrement, la première pièce présente avantageusement une plus petite dimension, dite épaisseur, introduite dans la largeur de la gorge de sertissage. La première pièce est donc une paroi. La première pièce est par exemple un cylindre, une plaque, un parallélépipède, etc.

En outre, avantageusement et selon l'invention, le bord à sertir est une paroi à contour fermé.

Dans des modes de réalisation particulièrement avantageux de l'invention, la première pièce est donc un récipient ouvert ou fermé à une extrémité opposée à l'extrémité formant le bord à sertir.

La gorge de sertissage est donc elle aussi avantageusement à contour fermé pour pouvoir accueillir le bord à sertir de la première pièce.

La butée de sertissage dans ces modes de réalisation est inclinée de sorte que le pied de la butée de sertissage situé à proximité du fond de la gorge de sertissage est plus vers l'extérieur du contour fermé que le bord de la butée de sertissage situé au niveau de l'ouverture de la gorge de sertissage.

Une fois sertie dans la gorge de sertissage de la deuxième pièce, le bord à sertir de la première pièce présente donc un bord à sertir qui va en s'évasant en direction du fond de la gorge de sertissage.

Plus particulièrement, lorsque la première pièce est une paroi à contour fermé symétrique par rapport à un axe de symétrie, la direction de traction est parallèle à l'axe de symétrie de la première pièce.

Avantageusement et selon l'invention, la première pièce est symétrique de révolution autour d'un axe de symétrie. La direction de traction est parallèle audit axe de symétrie.

Plus particulièrement, avantageusement et selon l'invention, la première pièce est une paroi cylindrique de révolution autour d'un axe de symétrie parallèle à la direction de traction.

Un procédé selon l'invention permet avantageusement de sertir des récipients cylindriques. Un procédé selon l'invention permet notamment de sertir des récipients cylindriques ou de formes plus compliquées, en une fois et de façon fiable.

À cet effet, avantageusement et selon l'invention, la deuxième pièce présente une gorge de sertissage et une lèvre de sertissage symétriques de révolution autour d'un axe de symétrie parallèle à la direction de traction.

De plus, la deuxième pièce est avantageusement un disque, de sorte qu'elle permet de fermer l'extrémité d'une première pièce. Notamment la deuxième pièce forme le couvercle ou le fond d'une première pièce cylindrique, notamment d'un cylindre formant récipient. Il permet évidemment aussi de fermer des récipients à pression atmosphérique.

Un procédé selon l'invention permet donc de fermer un récipient cylindrique pour former un contenant destiné à stocker des fluides sous pression ou un vide partiel.

Avantageusement, le fond de la gorge de sertissage circulaire présente un diamètre supérieur ou égal au diamètre du bord à sertir cylindrique de la première pièce.

Plus particulièrement, avantageusement et selon l'invention, la première pièce présente un bord à sertir de forme tronconique de révolution autour d'un axe de symétrie parallèle à la direction de traction.

De plus, avantageusement et selon l'invention, la butée de sertissage présente une surface globalement tronconique de révolution autour d'un axe de symétrie parallèle à la direction de traction, d'angle au sommet égal à l'angle au sommet du bord à sertir tronconique de révolution de la première pièce.

Le bord à sertir de la première pièce est avantageusement conformé pour venir au contact de la butée de sertissage lors de l'étape d'introduction du bord à sertir dans la gorge de sertissage. Le bord à sertir présente au moins une portion de surface complémentaire de la butée de sertissage.

Le bord à sertir est notamment tronconique vers l'extérieur par rapport au corps de la première pièce. Cela permet au bord à sertir d'être au contact de la butée de sertissage et être insérée dans la gorge de de sertissage. La première pièce présente donc une extrémité en forme de trompette.

Ainsi, la première pièce n'est pas déformée sous l'effet du sertissage de la lèvre de sertissage : le bord à sertir est déjà au contact de la butée de sertissage avant l'étape de sertissage. Une telle caractéristique est particulièrement avantageuse dans le cas d'une première pièce en matériau très rigide et qui se déformerait mal ou de façon irrégulière sous l'effet du rabattement de la lèvre de sertissage, et dans le cas d'une première pièce en matériau fragile qui romprait sous l'effet du rabattement de la lèvre de sertissage.

De plus, avantageusement et selon l'invention, le générateur de champ magnétique est disposé en regard de la lèvre de sertissage, décalé selon la direction de traction par rapport à la lèvre de sertissage, de sorte qu'au moins une partie du générateur de champ magnétique est disposée au-delà d'une extrémité libre de la lèvre de sertissage.

Ladite partie du générateur de champ magnétique disposée au-delà de l'extrémité libre de la lèvre de sertissage n'est donc pas en regard de la lèvre de sertissage, mais directement en regard de la première pièce. Ainsi, l'extrémité libre de la lèvre de sertissage est plongée dans un champ magnétique intense et uniforme lors de l'étape de sertissage magnétique.

La combinaison d'un fond de gorge de sertissage de largeur proche de l'épaisseur du bord à sertir et de cette disposition du générateur de champ magnétique par rapport à la lèvre de sertissage permet de minimiser le frottement entre l'extrémité libre de la lèvre de sertissage et le bord à sertir. Ainsi, l'endommagement potentiel du bord à sertir lors du sertissage magnétique est minimisé. De plus, cela permet d'interposer un film entre le bord à sertir et la gorge de sertissage, sans que ce film soit déchiré par l'extrémité libre de la lèvre de sertissage lors du sertissage magnétique.

Plus particulièrement, avantageusement et selon l'invention:

- le sertissage magnétique est réalisé avec un générateur de champ magnétique symétrique de révolution autour d'un axe de symétrie, et présentant un plan de symétrie orthogonal audit axe de symétrie,
- le générateur de champ magnétique est disposé radialement autour de la lèvre de sertissage, décalé selon la direction de traction par rapport à la lèvre de sertissage, de sorte que le plan de symétrie du générateur de champ magnétique est axialement (selon l'axe de symétrique du générateur de champ magnétique) au-delà d'un plan médian de la lèvre de sertissage.

La lèvre de sertissage présente un plan médian s'étendant à mi-distance entre le pied de la lèvre de sertissage et l'extrémité libre de la lèvre de sertissage. Le plan médian s'étend à mi-distance entre le fond de la gorge de sertissage et l'extrémité libre de la lèvre de sertissage.

Une telle disposition est particulièrement avantageuse lorsque la première et la deuxième pièce sont cylindriques de révolution, notamment lorsque le bord à sertir et la lèvre de sertissage sont cylindrique de révolution autour d'un axe de symétrie. Dans un tel cas, l'axe de symétrie de révolution du générateur de champ magnétique est avantageusement disposé confondu avec les axes de symétrie de la première et de la deuxième pièce.

Une telle caractéristique permet d'améliorer le sertissage magnétique de la lèvre magnétique sur le bord à sertir. Elle permet notamment de s'assurer que l'extrémité libre de la lèvre de sertissage est bien propulsée radialement. Elle permet d'obtenir un sertissage de qualité, en minimisant les frottements entre l'extrémité libre de la lèvre de sertissage et le bord à sertir lors du sertissage.

Dans un procédé selon l'invention, à l'étape de sertissage magnétique, le générateur de champ magnétique présente une portion située axialement au-delà de l'extrémité libre de la lèvre de sertissage mesurant entre 10% et 25 % de la longueur de la lèvre de sertissage.

Le générateur de champ magnétique comprend avantageusement une bobine électrique générant un champ magnétique orienté selon son axe de symétrie à l'intérieur de ladite bobine. Le générateur de champ magnétique peut aussi comprendre un concentrateur de champ magnétique.

L'invention s'étend également à un assemblage d'au moins deux pièces ayant été serties l'une sur l'autre selon un procédé conforme l'invention.

L'invention s'étend à un assemblage selon au moins une direction, dite direction de traction, comprenant :

- au moins une première pièce présentant un bord, dit bord à sertir, s'étendant à une extrémité de ladite première pièce selon la direction de traction,
- au moins une deuxième pièce présentant :

    - une lèvre, dite lèvre de sertissage, au moins pour partie constituée d'un matériau électriquement conducteur,
    - une butée, dite butée de sertissage, s'étendant en regard et à distance d'un flanc intérieur de la lèvre de sertissage, en ménageant une gorge, dite gorge de sertissage :

    - la lèvre de sertissage étant sertie uniformément sur le bord à sertir, de sorte qu'une partie dudit bord à sertir est serré dans la gorge de sertissage entre la butée de sertissage et la lèvre de sertissage,

caractérisé en ce que la butée de sertissage présente au moins une portion inclinée par rapport à la direction de traction, et en ce qu'une partie dudit bord à sertir est serrée entre :

- une face, dite face intérieure, de la deuxième pièce, ladite face intérieure étant distincte de la butée de sertissage, et
- une extrémité libre de la lèvre de sertissage rabattue contre ladite face intérieure,

de sorte que le bord à sertir présente une butée avec ladite face intérieure et une butée avec ledit flanc intérieur de l'extrémité libre de la lèvre de sertissage.

La lèvre de sertissage est avantageusement sertie uniformément sur le bord à sertir par une opération de sertissage magnétique. En effet, seul le sertissage magnétique permet d'obtenir une uniformité parfaite du sertissage. Plus particulièrement, la lèvre de sertissage est avantageusement exempte de marques de sertissage.

De plus, dans un assemblage selon l'invention, ladite face intérieure est avantageusement orthogonale à la direction de traction.

En outre, avantageusement et selon l'invention, la butée entre le bord à sertir et la face intérieure est orthogonale à la direction de traction, et en ce que la butée entre le bord à sertir et l'extrémité libre de la lèvre de sertissage est orthogonale à la direction de traction.

Un assemblage selon l'invention comprend avantageusement en outre un film comprenant au moins une couche de matériau électriquement isolant, interposé entre la première pièce et la deuxième pièce.

Le film est avantageusement formé d'un matériau polymère diélectrique. Un tel film isolant permet d'isoler électriquement la première pièce de la deuxième. Un tel film permet ainsi d'éviter des réactions d'oxydoréduction entre la première et la deuxième pièce, permettant ainsi de réaliser des assemblages dans lesquels la première pièce et la deuxième pièce sont faites de matériaux métalliques comprenant des métaux différents.

D'autres buts, caractéristiques et avantages de l'invention apparaîtront à la lecture de la description suivante donnée à titre non limitatif et qui se réfère aux figures annexées dans lesquelles :

- la figure 1 est une représentation schématique d'un assemblage en coupe longitudinale selon un mode de réalisation conforme à l'invention,
- la figure 2a est un schéma de détail représenté en figure 1 de la zone d'assemblage d'une première pièce et d'une deuxième pièce selon un premier mode de réalisation conforme à l'invention, avant l'étape de sertissage magnétique,

- la figure 2b est un schéma conforme à la figure 2a, après l'étape de sertissage magnétique,
- la figure 3 est un schéma de détail représenté en figure 1 de la zone d'assemblage d'une première pièce et d'une deuxième pièce selon un deuxième mode de réalisation conforme à l'invention, avant l'étape de sertissage magnétique,
- la figure 4 est un schéma de détail représenté en figure 1 de la zone d'assemblage d'une première pièce et d'une deuxième pièce selon un troisième mode de réalisation conforme à l'invention, avant l'étape de sertissage magnétique,
- la figure 5 est un schéma de détail représenté en figure 1 de la zone d'assemblage d'une première pièce et d'une deuxième pièce selon un quatrième mode de réalisation conforme à l'invention, avant l'étape de sertissage magnétique,
- la figure 6 est un schéma de détail représenté en figure 1 de la zone d'assemblage d'une première pièce et d'une deuxième pièce selon un cinquième mode de réalisation conforme à l'invention, avant l'étape de sertissage magnétique,

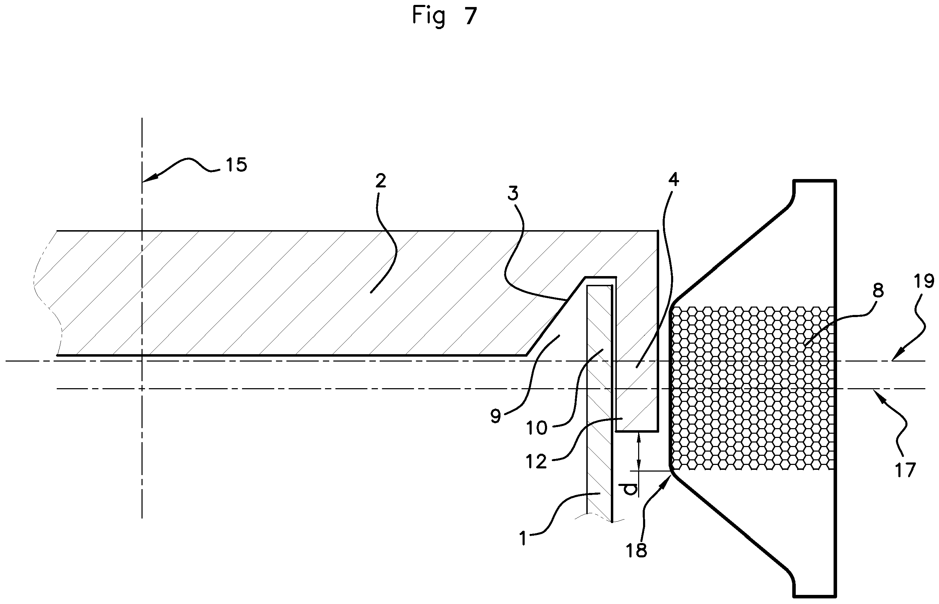

- la figure 7 est un schéma de détail représentant la zone d'assemblage d'une première pièce et d'une deuxième pièce et la disposition avantageuse d'un générateur de champ magnétique par rapport à la lèvre de sertissage.

Dans les modes de réalisation présentés la première pièce est un récipient 1 à contour fermé -plus particulièrement cylindrique de révolution-fermé par un fond 14 à l'une de ses extrémités selon son axe de symétrie 15 et ouvert à la seconde de ses deux extrémités selon son axe de symétrie. On souhaite fermer l'extrémité ouverte 10 de ce récipient 1 par une deuxième pièce qui est un couvercle 2.

Dans un procédé selon l'invention on introduit l'extrémité ouverte, ou bord à sertir 10, du récipient 1 dans une gorge de sertissage 9 ménagée dans une face, dite face intérieure 16, du couvercle 2. La gorge de sertissage 9 présente une forme et une largeur adaptée pour pouvoir y introduire le bord à sertir 10 du récipient 1. La gorge de sertissage 9 est ménagée dans un couvercle 2 massif.

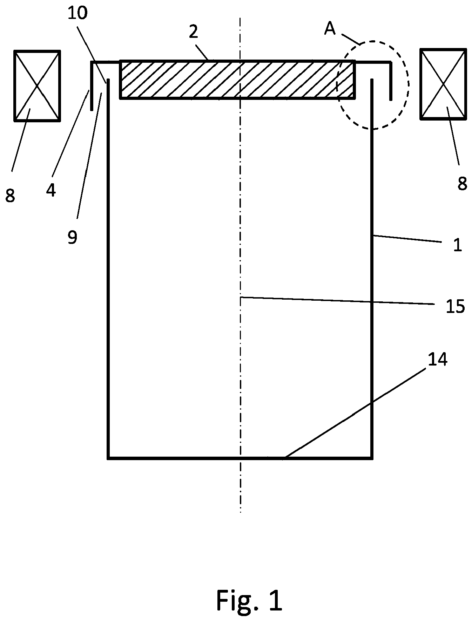

Le couvercle 2 est aussi symétrique de révolution autour d'un axe de symétrie qui est confondu avec l'axe de symétrie 15 du récipient 1 lorsque le bord à sertir 10 du récipient 1 est introduit dans la gorge de sertissage 9 du couvercle 2, comme représenté en figure 1.

L'assemblage entre le récipient et le couvercle peut être appelé à subir des efforts de traction principalement selon une direction parallèle à l'axe de symétrie 15, notamment lorsque le contenant obtenu par l'assemblage du récipient 1 et du couvercle 2 contient un fluide sous pression ou d'un vide partiel par rapport à la pression extérieure.

La gorge de sertissage 9 est ménagée à proximité du bord périphérique du couvercle 2, de sorte que ce dernier présente, entre la gorge de sertissage 9 et son bord périphérique extérieur, une lèvre de sertissage 4.

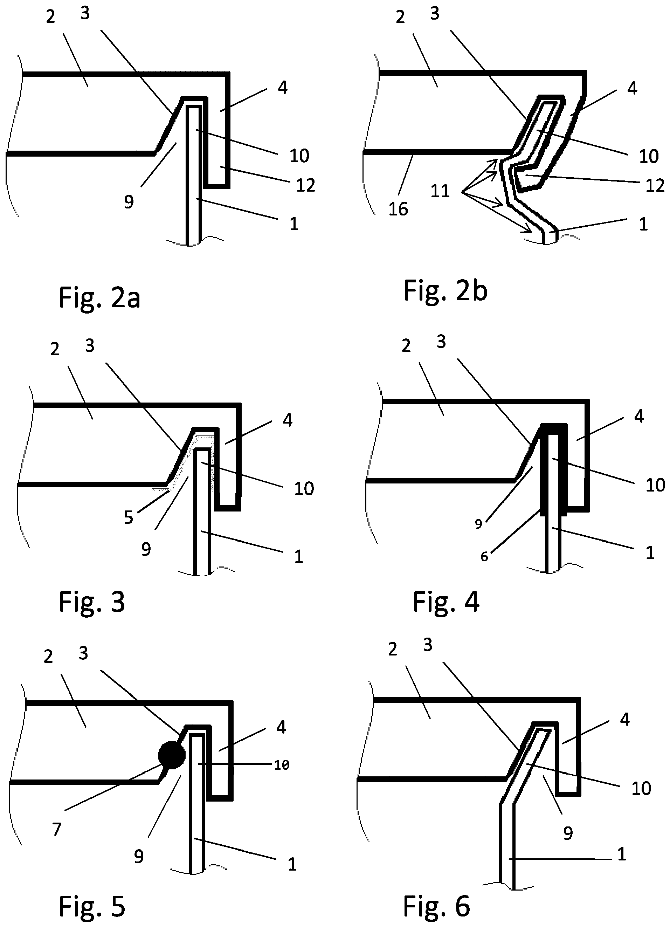

La zone d'assemblage A entre le récipient 1 et le couvercle 2 est grossie et représentée en coupe aux figures 2a, 2b, 3a, 3b, 4, 5 et 6 qui représentent différents modes de réalisation de l'invention.

Les figures 2a et 2b représentent un premier mode de réalisation selon l'invention.

Dans ce mode de réalisation, la lèvre de sertissage 4 s'étend sensiblement selon une direction parallèle à l'axe de symétrie (selon une génératrice autour dudit axe de symétrie). La lèvre de sertissage est de largeur constante entre sa zone d'attache avec le reste du couvercle et son extrémité libre.

La gorge de sertissage 9 présente un profil trapézoïdal. En effet, la butée de sertissage 3 est oblique par rapport à l'axe de symétrie 15. La butée de sertissage 3 est une surface tronconique de même axe de symétrie que celui du couvercle 2 et dont le sommet est du côté de la gorge de sertissage par rapport au couvercle. La gorge de sertissage est donc plus large au niveau de son ouverture que de son fond.

Le fond de la gorge de sertissage 9 présente le même diamètre que le bord à sertir 10 du récipient qui est une paroi cylindrique de révolution. En outre, le fond de la gorge de sertissage 9 présente une largeur sensiblement égale à l'épaisseur du bord à sertir 10, de sorte qu'après le sertissage, aucun espace radial ne subsiste entre le bord à sertir et les flancs (butée de sertissage d'une part et lèvre de sertissage d'autre part) de la gorge de sertissage.

À la figure 2b, l'assemblage obtenu après une étape de sertissage magnétique appliqué à l'assemblage de la figure 2a est représenté. L'espace entre le bord à sertir 10 et la gorge de sertissage 9 n'est fourni que pour faciliter la lecture du schéma. Les faces du bord à sertir 10 et de la gorge de sertissage 9 sont en réalité en contact sur toute leur surface.

Le sertissage magnétique est réalisé par l'application d'une impulsion magnétique, c'est-à-dire par l'application d'une variation de champ magnétique brève et intense sur la lèvre de sertissage 4. À cet effet, comme représenté en figure 1, la zone d'assemblage entre le récipient 1 et le couvercle 2 est introduite dans une bobine 8 qui entoure le couvercle 2, notamment qui entoure la lèvre de sertissage 4.

Plus particulièrement, comme représenté à la figure 8, une bobine 8 est disposée radialement autour de la lèvre de sertissage 4, en regard de celle-ci sans la toucher.

La lèvre de sertissage 4 présente un plan médian 19 situé entre le fond de la gorge 3 et l'extrémité libre 12 de la lèvre de sertissage.

La bobine présente un plan de symétrie 17 disposé au-delà du plan médian 19 de la lèvre 4, de sorte que le bord inférieur 18 de la bobine est disposé axialement (selon l'axe de symétrie 15) au-delà - à une distance d - de l'extrémité libre 12 de la lèvre de sertissage.

Pendant le sertissage, la lèvre de sertissage 4 est propulsée radialement vers l'intérieur en direction de la butée de sertissage. La force de Laplace subie par la lèvre de sertissage est suffisante pour que celle-ci acquière une énergie cinétique suffisante pour pouvoir entraîner le bord à sertir 10 du récipient jusqu'au contact de la butée de sertissage 3, en déformant radialement le récipient 1.

La figure 2b représente l'assemblage particulièrement avantageux obtenu par un procédé selon l'invention. Le bord à sertir 10 est serré entre la lèvre de sertissage et la butée de sertissage.

La butée de sertissage 3 tronconique est en contact de surface avec le bord à sertir 10, de façon à pouvoir supporter un effort de traction selon une direction parallèle à l'axe de symétrie 15 tendant à rapprocher axialement le récipient 1 du couvercle 2. De la même manière, la lèvre de sertissage 4 est en contact de surface tronconique avec le bord à sertir 10, de façon à pouvoir supporter un effort de traction selon une direction parallèle à l'axe de symétrie 15 tendant à éloigner axialement le récipient 1 du couvercle 2. Ces surfaces tronconiques de contact permettent à l'assemblage de supporter des efforts axiaux bien plus importants qu'avec un sertissage droit dans lequel seules les forces de friction entre le bord à sertir et la gorge de sertissage permettent de maintenir le récipient et le couvercle assemblés.

Après sertissage magnétique, le récipient 1 présente des déformations 11 à proximité du bord à sertir 10, notamment le récipient présente une gorge juste au-dessous du couvercle 2. Après sertissage, le couvercle 2 présente une surface périphérique tronconique.

Le sertissage magnétique d'un tel assemblage permet de réaliser l'opération de sertissage en une seule fois et de façon uniforme tout autour de la zone d'assemblage entre le récipient et le couvercle. Un tel sertissage est donc particulièrement fiable. Une telle méthode de sertissage est aussi particulièrement rapide, permettant de réaliser des assemblages conformes à l'invention à une cadence élevée. Une telle méthode de sertissage est aussi rapidement adaptée à d'autres formes de première et deuxième pièces car elle ne requière pas de conception, de réalisation et de montage d'un nouvel outil à sertir pour chaque nouvelle forme de couvercle.

En outre, grâce au sertissage magnétique, la deuxième pièce, notamment la lèvre de sertissage, ne présente pas de marques de sertissage dues à l'impact d'un outil sur le métal. La lèvre de sertissage est avantageusement exempte de marques de sertissage. Une telle méthode permet donc d'obtenir des assemblages dans lesquels l'esthétique de la surface est importante.

En outre, dans la gorge formée à proximité du bord à sertir de la première pièce, le passage d'un outil de sertissage est complexe à mettre en oeuvre, voire impossible. En effet, la largeur de cette gorge est généralement faible et un sertissage mécanique demande le passage d'un outil, ce qui aurait pour conséquence d'impacter simultanément la première pièce, en dégradant son aspect extérieur. Le sertissage magnétique en revanche n'impose aucune contrainte géométrique et peut parfaitement être mis en oeuvre dans les exemples présentés. Le choix d'un sertissage magnétique est donc essentiel dans la mise en oeuvre d'un procédé selon l'invention.

De plus, conformément à l'invention, la lèvre de sertissage 4 est plus longue que la profondeur de la gorge de sertissage 9, de sorte que son extrémité libre 12 est au-delà du bord de la gorge de sertissage, c'est-à-dire au-delà de la face intérieure 16 du couvercle 2. Cela est illustré par exemple en figure 2a, par une vue en profil par une coupe longitudinale par un plan comprenant l'axe de symétrie du récipient 1.

Ainsi, lors du sertissage magnétique du couvercle sur le récipient, le bord à sertir 10 est en partie serrée entre la butée de sertissage tronconique et la lèvre de sertissage, mais il est aussi en partie serrée entre la face intérieure 16 et l'extrémité libre 12 de la lèvre de sertissage 4. En effet, l'extrémité libre 12 de la lèvre de sertissage 4 n'étant pas en regard de la butée de sertissage, elle a poursuivi sa course sous l'effet de l'impulsion magnétique jusqu'à être rabattue contre la face intérieure 16 du couvercle.

Là encore, la technique du sertissage magnétique est particulièrement avantageuse car elle permet de réaliser le sertissage de la lèvre de sertissage en une seule fois, ce qui n'aurait pas été le cas avec un sertissage mécanique. Le sertissage magnétique permet en outre de s'assurer que le récipient n'est à aucun moment impacté par une autre pièce mécanique que la lèvre de sertissage.

L'assemblage obtenu par un tel mode de réalisation est particulièrement avantageux car il permet d'augmenter la résistance à des efforts de traction relatifs entre le récipient 1 et le couvercle 2. En effet, le bord à sertir 10 présente plusieurs déformations 11 et présente des butées annulaires avec la face intérieure 16 du couvercle 2 d'une part et avec le flanc intérieur de l'extrémité libre 12 de la lèvre de sertissage 4 d'autre part. Or ces butées sont sensiblement orthogonales à l'axe de symétrie et donc à la direction de traction selon laquelle un gaz sous pression ou un vide partiel tendrait à éloigner axialement ou à rapprocher axialement le couvercle 2 du récipient 1.

À la figure 3 un deuxième mode de réalisation compatible avec le premier mode de réalisation est représenté, avant sertissage.

Dans ce mode de réalisation, une étape supplémentaire est ajoutée au procédé avant l'introduction du bord à sertir 10 dans la gorge de sertissage 9. Lors de cette étape, un film 5 souple est interposé entre le bord à sertir 10 et la gorge de sertissage 9 (ou entre le récipient 1 et le couvercle 2 de façon plus générale).

Avantageusement ce film 5 s'étend dans toute la gorge de sertissage 9 et le long de toute la longueur de la lèvre de sertissage, de sorte que l'assemblage obtenu entre le récipient et le couvercle ne présente aucune zone de contact direct entre le récipient et le couvercle.

Un tel film 5 permet d'améliorer l'étanchéité obtenue lors du sertissage magnétique entre le bord à sertir 10 et la gorge de sertissage 9. En effet, le film 5 est comprimé entre le bord à sertir et la gorge de sertissage après sertissage, de sorte qu'il assure une étanchéité parfaite en comblant tout interstice ou défaut de surface pouvant subsister entre le bord à sertir et la gorge de sertissage.

Un tel film 5 est avantageusement choisi électriquement isolant. Ainsi, il permet d'éviter des réactions d'oxydoréduction entre le récipient et le couvercle lorsqu'ils sont constitués de matériaux métalliques distincts.

Un tel film 5 est par exemple choisi en élastomère d'une épaisseur d'environ 0,2 à 0,3 mm.

À la figure 4 un troisième mode de réalisation compatible avec les premier et deuxième modes de réalisation est représenté, avant sertissage.

Dans ce mode de réalisation, une pièce moulée 6 est montée sur le bord à sertir 10 avant son introduction dans la gorge de sertissage 9.

Une telle pièce moulée permet aussi d'améliorer l'étanchéité de l'assemblage et d'isoler électriquement le récipient du couvercle.

Cette pièce moulée 6 remplace avantageusement le film 5 enseigné dans le mode de réalisation précédent. Cependant, rien n'empêche de monter, en combinaison, une pièce moulée 6 sur le bord à sertir 10 et un film 5 interposé entre la pièce moulée 6 et la gorge de sertissage 9.

La pièce moulée est par exemple choisie en thermoplastique souple, par exemple en EPDM (éthylène-propylène-diène monomère). La pièce moulée peut être réalisée de différentes manières : par exemple elle peut être fabriquée à l'aide d'un moule type puis montée sur le bord à sertir, ou bien elle peut être moulée directement sur le bord à sertir par surmoulage, par enrobage, ou par enduction sur le bord à sertir 10.

À la figure 5 un quatrième mode de réalisation compatible avec les premier, deuxième et troisième modes de réalisation est représenté, avant sertissage.

Dans ce mode de réalisation, la butée de sertissage présente une rainure permettant d'y monter un joint 7 d'étanchéité.

Un tel joint 7 d'étanchéité permet d'améliorer l'étanchéité obtenue lors du sertissage magnétique entre le bord à sertir 10 et la gorge de sertissage 9. En effet, le joint 7 d'étanchéité est comprimé entre le bord à sertir et la butée de sertissage après sertissage.

Ce joint 7 d'étanchéité remplace avantageusement le film 5 et/ou la pièce moulée 6 enseignés dans les modes de réalisation précédents. Cependant, rien n'empêche de monter, en combinaison, un joint 7 d'étanchéité dans une rainure usinée dans la butée de sertissage, avec une pièce moulée 6 sur le bord à sertir 10 et/ou un film 5 interposé entre la pièce moulée 6 et la gorge de sertissage 9.

Un tel joint 7 d'étanchéité est un élastomère, par exemple un fluoroélastomère, par exemple du VITON®.

À la figure 6 un cinquième mode de réalisation compatible avec les troisième et quatrième modes de réalisation est représenté, avant sertissage.

Dans ce mode de réalisation, le récipient est cylindrique de révolution, mais le bord à sertir 10 est tronconique. Plus particulièrement, le bord à sertir est tronconique dans le sens d'un évasement de l'extrémité ouverte du récipient. En outre, le bord à sertir est tronconique d'angle au sommet (du cône sur lequel il se trouve) sensiblement égal à celui de la butée de sertissage.

Ainsi, lorsque le bord à sertir 10 est introduit dans la gorge de sertissage 9, il est directement au contact de la butée de sertissage 3. Lors de l'étape de sertissage magnétique, le bord à sertir, et a fortiori le récipient, n'est pas déformé ; seule la lèvre de sertissage 4 est déformée. En effet, la lèvre de sertissage est rabattue sur le bord à sertir mais, le bord à sertir 10 étant déjà en butée sur la butée de sertissage 3, sa portion supérieure n'est ni entraînée, ni déformée par l'impact de la lèvre de sertissage (hormis une éventuellement légère compression dans le sens de l'épaisseur du bord à sertir) ; seule une portion du bord à sertir, impactée par l'extrémité libre de la lèvre de sertissage est déformée sous la face intérieure 16.

Un tel mode de réalisation est particulièrement avantageux lorsque le matériau du récipient est peu malléable. En effet, si le matériau du récipient 1 est trop dur le sertissage risque d'être imparfait car la lèvre de sertissage 4 n'aurait pas assez d'énergie cinétique pour déformer le bord à sertir jusqu'à ce qu'il soit serré entre la lèvre de sertissage et la butée de sertissage.

De même, un tel mode de réalisation est particulièrement avantageux lorsque le matériau du récipient 1 est fragile et que le bord à sertir risquerait de casser au lieu d'être déformé lors du sertissage.

De même, la lèvre de sertissage 4 est avantageusement en matériau déformable plastiquement pour ne pas rompre sous l'effet de l'impulsion magnétique imposée par une bobine 8 de sertissage magnétique.

Conformément au document "DESCRIPTION DE FONCTIONNEMENT DE LA MACHINE À SOUDER, FORMER, COUPER OU ASSEMBLER PAR IMPULSION MAGNÉTIQUE", Gaille et Al., Doc. IX-513-01, SWI Swiss Welding Institute, l'épaisseur de peau δ est déterminée par la formule :

$$\delta = \sqrt{\frac{2}{\omega \mu \sigma}} \qquad [m]$$

où ω : la pulsation du champ magnétique imposé,

σ : conductivité électrique de la lèvre de sertissage,

μ : la perméabilité magnétique absolue de la lèvre de sertissage, avec μ= μ$_0$μ$_r$, μ$_0$ étant la perméabilité magnétique du vide, et μ$_r$ la perméabilité magnétique relative de la lèvre de sertissage.

Conformément au même document, la pression p(t) subie par la lèvre à sertir au cours du temps est donc déterminée par la formule :

$$p(t) = \frac{B^2(t)}{2\mu} \quad [Pa = N/m^2]$$

où B(t) est l'intensité du champ magnétique imposé.

On choisit donc une deuxième pièce dont la lèvre de sertissage présente des caractéristiques appropriées à un sertissage magnétique efficace et fiable. Notamment on choisit la conductivité électrique et la perméabilité magnétique de la lèvre de sertissage.

À titre d'exemple un récipient tel que représenté dans les premiers modes de réalisation selon l'invention est en aluminium (donc le bord à sertir aussi) et le couvercle en cuivre (donc la lèvre de sertissage aussi). Dans le dernier mode de réalisation, le récipient est en acier.

La paroi du récipient (et donc le bord à sertir) présente une épaisseur d'environ 1 mm et la lèvre de sertissage une épaisseur d'environ 1 mm. Le diamètre du récipient et donc de la gorge de sertissage est d'environ 30 mm dans ce mode de réalisation particulier, et supérieur à 30 mm dans d'autres modes de réalisation. Rien n'empêche cependant de mettre en oeuvre un procédé selon l'invention sur un récipient de diamètre inférieur à 30mm.

De plus, l'angle au sommet de la butée de sertissage est d'environ 30 à 45°.

L'impulsion magnétique générée pour l'étape de sertissage magnétique met en oeuvre une énergie d'environ 3kJ sur une durée d'environ 15 microsecondes. La bobine 8 est disposée décalée selon l'axe de symétrie 15 de telle sorte que la distance d entre l'extrémité libre 12 de la lèvre de sertissage et le bord inférieur de la bobine 8 est de l'ordre de 3mm - on s'assure ainsi en particulier que l'extrémité libre de la lèvre de sertissage est effectivement rabattue contre la face intérieure lors du sertissage magnétique. La distance entre portions en regard de la lèvre de sertissage 4 et de la bobine 8 est de l'ordre de 1mm.

Ainsi, un contenant obtenu par sertissage magnétique d'un tel couvercle sur un tel récipient résiste à des différences de pression entre intérieur et extérieur supérieurs à 9 bars, c'est-à-dire à des pressions d'au moins 10 bars à l'intérieur du contenant.

L'invention peut faire l'objet de nombreuses autres variantes de réalisation non représentées.

L'invention permet par exemple de créer des assemblages d'une deuxième pièce sur une première pièce creuse de profil distinct d'un cylindre, par exemple triangulaire, parallélépipédique, pentagonal, hexagonal, octogonal, ... ou quelconque. Le sertissage magnétique est particulièrement avantageux car il permet de sertir de façon fiable tous types de formes en une seule fois et sans nécessiter de changer d'outil.

L'invention permet aussi par exemple de sertir deux tubes bout à bout.

La butée de sertissage peut présenter d'autres formes de sorte que la gorge de sertissage n'est pas nécessairement de profil trapézoïdal, dès lors qu'elle permet d'obtenir une portée de contact inclinée par rapport à une direction de traction entre bord à sertir et butée de sertissage et entre bord à sertir et lèvre de sertissage.

De nombreux types de matériaux peuvent être choisis pour le couvercle, et plus encore pour le récipient qui n'est pas nécessairement électriquement conducteur.

Rien n'empêche, par ailleurs, que la deuxième pièce soit en fait constituée d'au moins deux pièces : par exemple un bouchon présentant à sa périphérie des butées de sertissage et un opercule dans lequel le bouchon est introduit, ledit opercule présentant une forme adaptée pour former une lèvre de sertissage en regard de la périphérie du bouchon. Ainsi par exemple un tel bouchon peut être tronconique, et un tel opercule cylindrique fermé à une extrémité destinée à venir au contact de la plus grande des deux faces du bouchon.

## Revendications

1. Procédé d'assemblage selon au moins une direction, dite direction de traction (15),

   - d'une première pièce (1) présentant un bord, dit bord à sertir (10), s'étendant à une extrémité de ladite première pièce (1) selon la direction de traction (15),
   - et d'une deuxième pièce (2) présentant :

     - une lèvre, dite lèvre de sertissage (4), au moins pour partie constituée d'un matériau électriquement conducteur,
     - une butée, dite butée de sertissage (3), s'étendant en regard et à distance d'un flanc intérieur de la lèvre de sertissage (4), en ménageant une gorge, dite gorge de sertissage (9) :

       • ouverte selon la direction de traction (15),
       • adaptée pour recevoir ledit bord à sertir (10) de la première pièce (1),

     procédé dans lequel :
     - le bord à sertir (10) de la première pièce (1) est introduit dans la gorge de sertissage (9) de la deuxième pièce (2) selon ladite direction de traction (15),

- puis un sertissage magnétique est réalisé en appliquant à la lèvre de sertissage (4) une variation de champ magnétique adaptée pour rabattre sans enroulement et déformer plastiquement la lèvre de sertissage (4) en direction de la butée de sertissage (3), de façon à fermer la gorge de sertissage (9) sur le bord à sertir (10) de la première pièce (1),

**caractérisé en ce que** :

- la butée de sertissage (3) présente au moins une portion inclinée par rapport à la direction de traction (15),
- ladite lèvre de sertissage (4) présente une longueur supérieure à la profondeur de la gorge de sertissage (9),
- lors du sertissage magnétique une extrémité libre (12) de la lèvre de sertissage (4) est rabattue contre une face, dite face intérieure (16), de la deuxième pièce, ladite face intérieure 16 étant distincte de la butée de sertissage, de sorte que le bord à sertir présente une portion en butée contre ladite face intérieure (16) d'une part et en butée contre l'extrémité libre (12) de la lèvre de sertissage (4) d'autre part.

2. Procédé selon la revendication 1, **caractérisé en ce que** ladite face intérieure (16) comprend au moins une portion plane et orthogonale à la direction de traction (15), ladite portion recevant l'extrémité libre de la lèvre de sertissage lors du sertissage.

3. Procédé selon la revendication 1 ou 2, **caractérisé en ce que** la butée entre le bord à sertir (10) et la face intérieure (16) est orthogonale à la direction de traction (15), et **en ce que** la butée entre le bord à sertir (10) et l'extrémité libre (12) de la lèvre de sertissage est orthogonale à la direction de traction (15).

4. Procédé selon l'une des revendications 1 à 3, **caractérisé en ce que** la butée de sertissage est orientée selon une direction formant un angle distinct de 90° avec ladite direction de traction.

5. Procédé selon l'une des revendications 1 à 4, **caractérisé en ce que** la gorge de sertissage (9) présente un profil trapézoïdal.

6. Procédé selon l'une des revendications 1 à 5, **caractérisé en ce qu'**un film (5) est interposé entre le bord à sertir (10) et la gorge de sertissage (9).

7. Procédé selon la revendication 6, **caractérisé en ce que** ledit film (5) comprend au moins une couche de matériau électriquement isolant.

8. Procédé selon l'une des revendications 1 à 7, **caractérisé en ce que** :

- la première pièce (1) est une paroi cylindrique de révolution autour d'un axe de symétrie parallèle à la direction de traction,
- la deuxième pièce (2) présente une gorge de sertissage (9) et une lèvre de sertissage (4) symétriques de révolution autour d'un axe de symétrie parallèle à la direction de traction.

9. Procédé selon la revendication 8, **caractérisé en ce que** la première pièce (1) présente un bord à sertir de forme tronconique de révolution autour d'un axe de symétrie parallèle à la direction de traction (15).

10. Procédé selon la revendication 9, **caractérisé en ce que** la butée de sertissage (3) présente une surface globalement tronconique de révolution autour d'un axe de symétrie parallèle à la direction de traction (15), d'angle au sommet égal à l'angle au sommet du bord à sertir (10) tronconique de révolution de la première pièce (1).

11. Procédé selon l'une des revendications 1 à 10, **caractérisé en ce que** lors du sertissage magnétique, un générateur de champ magnétique (8) est disposé en regard de la lèvre de sertissage (4), décalé selon la direction de traction (15) par rapport à la lèvre de sertissage, de sorte qu'au moins une partie du générateur de champ magnétique est au-delà d'une extrémité libre de la lèvre de sertissage.

12. Assemblage selon au moins une direction, dite direction de traction (15), comprenant :

■ au moins une première pièce (1) présentant un bord, dit bord à sertir (10), s'étendant à une extrémité de ladite première pièce (1) selon la direction de traction (15),
■ au moins une deuxième pièce (2) présentant :

- une lèvre, dite lèvre de sertissage (4), au moins pour partie constituée d'un matériau électriquement conducteur,
- une butée, dite butée de sertissage (3), s'étendant en regard et à distance d'un flanc intérieur de la lèvre de sertissage (4), en ménageant une gorge, dite gorge de sertissage (9) :

■ la lèvre de sertissage (4) étant sertie uniformément sur le bord à sertir (10), de sorte qu'une partie dudit bord à sertir (10) est serrée dans la gorge de sertissage (9) entre la butée de sertissage (3) et la lèvre de sertissage (4),

**caractérisé en ce que** la butée de sertissage (3) présente au moins une portion inclinée par rapport à la direction de traction (15), et **en ce qu'**une partie dudit bord à sertir (10) est serrée entre :
- une face, dite face intérieure (16), de la deuxième pièce, ladite face intérieure (16) étant distincte de la butée de sertissage, et
- une extrémité libre (12) de la lèvre de sertissage (4) rabattue contre ladite face intérieure (16),

de sorte que le bord à sertir présente une butée avec ladite face intérieure (16) et une butée avec ledit flanc intérieur de l'extrémité libre (12) de la lèvre de sertissage (4).

13. Assemblage selon la revendication 12, **caractérisé en ce que** ladite face intérieure (16) comprend au moins une portion plane et orthogonale à la direction de traction (15), ladite portion recevant l'extrémité libre de la lèvre de sertissage lors du sertissage.

14. Assemblage selon l'une des revendications 12 ou 13, **caractérisé en ce que** la butée entre le bord à sertir (10) et la face intérieure (16) est orthogonale à la direction de traction (15), et **en ce que** la butée entre le bord à sertir (10) et l'extrémité libre (12) de la lèvre de sertissage est orthogonale à la direction de traction (15).

15. Assemblage selon l'une des revendications 12 à 14, **caractérisé en ce qu'**il comprend un film (5) comprenant au moins une couche de matériau électriquement isolant, interposé entre la première pièce (1) et la deuxième pièce (2).

**Patentansprüche**

1. Verfahren zur Zusammenstellung in zumindest eine Richtung, die Zugrichtung (15) genannt wird,

   ▪ eines ersten Teils (1), das einen Rand aufweist, der Bördelrand (10) genannt wird, der sich an einem Ende des besagten ersten Teils (1) in die Zugrichtung (15) erstreckt,
   ▪ und eines zweiten Teils (2), das Folgendes aufweist:

   - eine Lippe, die Bördellippe (4) genannt wird, die zumindest teilweise aus einem elektrisch leitenden Material besteht,

   - einen Anschlag, der Bördelanschlag (3) genannt wird, der sich gegenüber und auf Abstand zu einer Innenflanke der Bördellippe (4) erstreckt, und dabei eine Nut bildet, die Bördelnut (9) genannt wird:

   • die in die Zugrichtung (15) offen ist,
   • die ausgeführt ist, um den besagten Bördelrand (10) des ersten Teils (1) aufzunehmen,

Verfahren, bei dem:

   - der Bördelrand (10) des ersten Teils (1) in die Bördelnut (9) des zweiten Teils (2) in die besagte Zugrichtung (15) eingeführt wird,
   - danach ein magnetisches Bördeln durchgeführt wird, indem man auf die Bördellippe (4) eine geeignete Magnetfeldvariation anwendet, um die Bördellippe (4) ohne Einrollen und plastische Verformung in Richtung des Bördelanschlags (3) umzuschlagen, um die Bördelnut (9) am Bördelrand (10) des ersten Teils (1) zu schließen,

**dadurch gekennzeichnet, dass**:

   - der Bördelanschlag (3) zumindest einen im Verhältnis zur Zugrichtung (15) geneigten Abschnitt aufweist,
   - die besagte Bördellippe (4) eine Länge aufweist, die größer ist, als die Tiefe der Bördelnut (9),
   - beim magnetischen Bördeln ein freies Ende (12) der Bördellippe (4) auf eine Fläche des zweiten Teils umgeschlagen wird, die Innenfläche (16) genannt wird, wobei sich die besagte Innenfläche (16) vom Bördelanschlag unterscheidet, sodass der Bördelrand einen Abschnitt auf Anschlag gegen die besagte Innenfläche (16) einerseits und auf Anschlag gegen das freie Ende (12) der Bördellippe (4) andererseits aufweist.

2. Verfahren nach Anspruch 1, **dadurch gekennzeichnet, dass** die besagte Innenfläche (16) zumindest einen ebenen und einen zur Zugrichtung (15) orthogonalen Abschnitt umfasst, wobei der besagte Abschnitt beim Bördeln das freie Ende der Bördellippe aufnimmt.

3. Verfahren nach Anspruch 1 oder 2, **dadurch gekennzeichnet, dass** der Anschlag zwischen dem Bördelrand (10) und der Innenfläche (16) orthogonal zur Zugrichtung (15) liegt, und dadurch, dass der Anschlag zwischen dem Bördelrand (10) und dem freien Ende (12) der Bördellippe orthogonal zur Zugrichtung (15) liegt.

**4.** Verfahren nach einem der Ansprüche 1 bis 3, **dadurch gekennzeichnet, dass** der Bördelanschlag in eine Richtung ausgerichtet ist, die einen Winkel mit der besagten Zugrichtung einschlägt, der sich von 90° unterscheidet.

**5.** Verfahren nach einem der Ansprüche 1 bis 4, **dadurch gekennzeichnet, dass** die Bördelnut (9) ein trapezförmiges Profil aufweist.

**6.** Verfahren nach einem der Ansprüche 1 bis 5, **dadurch gekennzeichnet, dass** eine Folie (5) zwischen den Bördelrand (10) und die Bördelnut (9) eingelegt wird.

**7.** Verfahren nach Anspruch 6, **dadurch gekennzeichnet, dass** die besagte Folie (5) zumindest eine Schicht aus einem elektrisch isolierenden Material umfasst.

**8.** Verfahren nach einem der Ansprüche 1 bis 7, **dadurch gekennzeichnet, dass**:

- das erste Teil (1) eine drehzylindrische Wand um eine Symmetrieachse parallel zur Zugrichtung ist,
- das zweite Teil (2) eine drehsymmetrische Bördelnut (9) und Bördellippe (4) um eine Symmetrieachse parallel zur Zugrichtung aufweist.

**9.** Verfahren nach Anspruch 8, **dadurch gekennzeichnet, dass** das erste Teil (1) einen Bördelrand in Drehkegelstumpfform um eine Symmetrieachse parallel zur Zugrichtung (15) aufweist.

**10.** Verfahren nach Anspruch 9, **dadurch gekennzeichnet, dass** der Bördelanschlag (3) eine im Allgemeinen drehkegelstumpfförmige Fläche um eine Symmetrieachse parallel zur Zugrichtung (15) aufweist, mit einem Winkel an der Spitze gleich dem Winkel an der Spitze des drehkegelstumpfförmige Bördelrandes (10) des ersten Teils (1).

**11.** Verfahren nach einem der Ansprüche 1 bis 10, **dadurch gekennzeichnet, dass** beim magnetischen Bördeln ein Magnetfeldgenerator (8) gegenüber der Bördellippe (4), in die Zugrichtung (15) im Verhältnis zur Bördellippe versetzt angeordnet ist, sodass zumindest ein Teil des Magnetfeldgenerators jenseits von einem freien Ende der Bördellippe liegt.

**12.** Zusammenstellung in zumindest eine Richtung, die Zugrichtung (15) genannt wird, Folgendes umfassend:

▪ zumindest ein erstes Teil (1), das einen Rand aufweist, der Bördelrand (10) genannt wird, der sich an einem Ende des besagten ersten Teils (1) in die Zugrichtung (15) erstreckt,

▪ zumindest ein zweites Teil (2), das Folgendes aufweist:

- eine Lippe, die Bördellippe (4) genannt wird, die zumindest teilweise aus einem elektrisch leitenden Material besteht,
- einen Anschlag, der Bördelanschlag (3) genannt wird, der sich gegenüber und auf Abstand zu einer Innenflanke der Bördellippe (4) erstreckt, und dabei eine Nut bildet, die Bördelnut (9) genannt wird:

▪ wobei die Bördellippe (4) gleichförmig an den Bördelrand (10) gebördelt wird, sodass ein Abschnitt des besagten Bördelrandes (10) in der Bördelnut (9) zwischen dem Bördelanschlag (3) und der Bördellippe (4) geklemmt wird,

**dadurch gekennzeichnet, dass** der Bördelanschlag (3) zumindest einen im Verhältnis zur Zugrichtung (15) geneigten Abschnitt aufweist, und dadurch, dass ein Teil des besagten Bördelrandes (10) geklemmt wird zwischen:

- einer Fläche des zweiten Teils, die Innenfläche (16) genannt wird, wobei sich die besagte Innenfläche (16) vom Bördelanschlag unterscheidet, und
- einem freien Ende (12) der Bördellippe (4), das auf die besagte Innenfläche (16) umgeschlagen wird,

sodass der Bördelrand einen Anschlag mit der besagten Innenfläche (16) und einen Anschlag mit der besagten Innenflanke des freien Endes (12) der Bördellippe (4) aufweist.

**13.** Zusammenstellung nach Anspruch 12, **dadurch gekennzeichnet, dass** die besagte Innenfläche (16) zumindest einen ebenen und zur Zugrichtung (15) orthogonalen Abschnitt umfasst, wobei der besagte Abschnitt beim Bördeln das freie Ende der Bördellippe aufnimmt.

**14.** Zusammenstellung nach einem der Ansprüche 12 oder 13, **dadurch gekennzeichnet, dass** der Anschlag zwischen dem Bördelrand (10) und der Innenfläche (16) orthogonal zur Zugrichtung (15) liegt, und dadurch, dass der Anschlag zwischen dem Bördelrand (10) und dem freien Ende (12) der Bördellippe orthogonal zur Zugrichtung (15) liegt.

**15.** Zusammenstellung nach einem der Ansprüche 12 bis 14, **dadurch gekennzeichnet, dass** sie eine Folie (5) umfasst, die zumindest eine Schicht aus einem elektrisch isolierenden Material umfasst, die zwischen dem ersten Teil (1) und dem zweiten Teil (2) eingelegt ist.

**Claims**

1. Method for assembling, in at least one direction, named direction of traction (15),

   ▪ a first part (1) having an edge, named crimping edge (10), extending to an end of said first part (1) in said direction of traction (15),
   ▪ and a second part (2) having:

      - a lip, named crimping lip (4), at least partly made up of an electrically conducting material,
      - a stop, named crimping stop (3), extending opposite and remote from an inner side of the crimping lip (4), providing a groove, named crimping groove (9):

         • open in said direction of traction (15),
         • adapted to receive said crimping edge (10) of said first part (1),

   method in which:

      - the crimping edge (10) of the first part (1) is introduced into the crimping groove (9) of the second part (2) in said direction of traction (15),
      - then magnetic crimping is carried out by applying to the crimping lip (4) a magnetic field variation that is adapted to fold the crimping lip (4) without winding and to plastically deform the crimping lip (4) towards the crimping stop (3), so as to close the crimping groove (9) onto the crimping edge (10) of the first part (1),

   **characterised in that**:

      - the crimping stop (3) has at least one portion that is inclined relative to the direction of traction (15),
      - the crimping lip (4) is longer than the depth of the crimping groove (9),
      - during magnetic crimping a free end (12) of the crimping lip (4) is folded against a face, named inner face (16), of the second part, said inner face (16) being distinct from the crimping stop, so that the crimping edge has a portion in abutment against said inner face (16), on the one hand, and in abutment against the free end (12) of the crimping lip (4), on the other hand.

2. Method as claimed in claim 1, **characterised in that** said inner face (16) comprises at least one flat portion orthogonal to the direction of traction (15), said portion receiving the free end of the crimping lip during crimping.

3. Method as claimed in claim 1 or 2, **characterised in that** the stop between the crimping edge (10) and the inner face (16) is orthogonal to the direction of traction (15), and **in that** the stop between the crimping edge (10) and the free end (12) of the crimping lip is orthogonal to the direction of traction (15).

4. Method as claimed in any one of claims 1 to 3, **characterised in that** the crimping stop is oriented in a direction forming an angle different from 90° with said direction of traction.

5. Method as claimed in any one of claims 1 to 4, **characterised in that** the crimping groove (9) has a trapezoidal profile.

6. Method as claimed in any one of claims 1 to 5, **characterised in that** a film (5) is interposed between the crimping edge (10) and the crimping groove (9).

7. Method as claimed in claim 6, **characterised in that** said film (5) comprises at least one layer of electrically isolating material.

8. Method as claimed in any one of claims 1 to 7, **characterised in that**:

      - the first part (1) is a rotationally cylindrical wall about an axis of symmetry parallel to said direction of traction,
      - the second part (2) has a crimping groove (9) and a crimping lip (4) that are rotationally symmetrical about an axis of symmetry parallel to said direction of traction.

9. Method as claimed in claim 8, **characterised in that** the first part (1) has a crimping edge of frustoconical shape about an axis of symmetry parallel to the direction of traction (15).

10. Method as claimed in claim 9, **characterised in that** the crimping stop (3) has a generally frustoconical surface about an axis of symmetry parallel to the direction of traction (15), with an apex equal to the apex of the frustoconical crimping edge (10) of the first part (1).

11. Method as claimed in any one of claims 1 to 10, **characterised in that**, during magnetic crimping, a magnetic field generator (8) is disposed opposite the crimping lip (4), offset in said direction of traction (15) relative to the crimping lip, so that at least part of the magnetic field generator is beyond a free end of the crimping lip.

**12.** Assembly in at least one direction, named direction of traction (15), comprising:

▪ at least one first part (1) having an edge, named crimping edge (10), extending to an end of said first part (1) in said direction of traction (15),
▪ at least one second part (2) having:

- a lip, named crimping lip (4), at least partly made up of an electrically conducting material,
- a stop, named crimping stop (3), extending opposite and remote from an inner side of the crimping lip (4), providing a groove, named crimping groove (9):

▪ the crimping lip (4) being evenly crimped onto the crimping edge (10), so that part of said crimping edge (10) is clamped inside the crimping groove (9) between the crimping stop (3) and the crimping lip (4),

**characterised in that** the crimping stop (3) has at least one portion that is inclined relative to the direction of traction (15), and **in that** part of said crimping edge (10) is clamped between:

- a face, named inner face (16), the of second part, said inner face (16) being distinct from said crimping stop, and
- a free end (12) of the crimping lip (4) folded against said inner face (16),

so that the crimping edge has a stop with said inner face (16) and a stop with said inner side of the free end (12) of the crimping lip (4).

**13.** Assembly as claimed in claim 12, **characterised in that** said inner face (16) comprises at least one flat portion orthogonal to the direction of traction (15), said portion receiving the free end of the crimping lip during crimping.

**14.** Assembly as claimed in claim 12 or 13, **characterised in that** the stop between the crimping edge (10) and the inner face (16) is orthogonal to the direction of traction (15), and **in that** the stop between the crimping edge (10) and the free end (12) of the crimping lip is orthogonal to the direction of traction (15).

**15.** Assembly as claimed in any one of claims 12 to 14, **characterised in that** it comprises a film (5) comprising at least one layer of electrically isolating material interposed between the first part (1) and the second part (2).

Fig. 1

Fig. 2a

Fig. 2b

Fig. 3

Fig. 4

Fig. 5

Fig. 6

Fig 7

## RÉFÉRENCES CITÉES DANS LA DESCRIPTION

**Documents brevets cités dans la description**

- WO 2007132468 A

- BE 676306 A

**Littérature non-brevet citée dans la description**

- DESCRIPTION DE FONCTIONNEMENT DE LA MACHINE À SOUDER, FORMER, COUPER OU ASSEMBLER PAR IMPULSION MAGNÉTIQUE. **GAILLE et al.** Doc. IX-513-01. SWI Swiss Welding Institute